## Europäisches Patentamt
## European Patent Office
## Office européen des brevets

(19)

(11) Veröffentlichungsnummer: **0 353 517**
**A2**

(12) **EUROPÄISCHE PATENTANMELDUNG**

(21) Anmeldenummer: 89112829.0

(22) Anmeldetag: 13.07.89

(51) Int. Cl.4: **G01N 25/14**

(30) Priorität: 03.08.88 DE 3826351

(43) Veröffentlichungstag der Anmeldung:
**07.02.90 Patentblatt 90/06**

(84) Benannte Vertragsstaaten:
**BE CH DE ES FR GB IT LI LU NL SE**

(71) Anmelder: **Degussa Aktiengesellschaft**
**Weissfrauenstrasse 9**
**D-6000 Frankfurt am Main 1(DE)**

(72) Erfinder: **Diehl, Walter, Dr. Dipl.-Phys.**
**Gustav-Adolf-Strasse 29**
**D-6450 Hanau 1(DE)**
Erfinder: **Preisser, Friedrich, Dr. Dipl.-Phys.**
**Am Hellerberg 4**
**D-6470 Büdingen(DE)**
Erfinder: **Schäfer, Wolfgang, Dr. Dipl.-Phys.**
**Ludwig-Uhland-Strasse 10**
**D-6451 Grosskrotzenburg(DE)**

(54) **Verfahren zur Bestimmung des Kohlungspotentials in Gaskohlungsöfen und Vorrichtung dazu.**

(57) Das Kohlungspotential in Gaskohlungsöfen wird mit Sensoren bestimmt, auf denen durch Temperaturabsenkung eine Kohlenstoffabschichtung erzwungen wird. Aus der Temperatur der beginnenden Kohlenstoffabscheidung läßt sich das Kohlungspotential des Gases berechnen.

EP 0 353 517 A2

## Verfahren zur Bestimmung des Kohlungspotentials in Gaskohlungsöfen und Vorrichtung dazu

Die Erfindung betrifft ein Verfahren und eine Vorrichtung zur Bestimmung des Kohlungspotentials in Gaskohlungsöfen mittels eines Sensorelements. Beim Gaskohlungsverfahren werden fertig bearbeitete Stahlteile einer kohlenstoffangereicherten Ofenatmosphäre ausgesetzt, um durch einen Diffusionsprozeß eine Oberflächenschicht mit erhöhtem Kohlenstoffgehalt zu erzeugen. Man verbindet so die Eigenschaften des Kernmaterials mit einer hohen Verschleißfestigkeit der Oberflächenschicht.

Das Einhalten eines vorgegebenen Kohlenstoffgehaltes in der angereicherten Schicht innerhalb der verlangten "Einhärtungstiefe" erfordert eine äußerst exakte Prozeßführung. Besondere Schwierigkeiten bereitet dabei die Kontrolle der Kohlungsatmosphäre unmittelbar im Ofen. Das Kohlungsgas wird durch unvollständige Verbrennung von Kohlenwasserstoffen mit Luft außerhalb des Ofens oder durch thermische Zersetzung im Ofen selbst erzeugt. Im Ofen stellt sich ein temperaturabhängiges Gleichgewicht zwischen verschiedenen Verbindungen ein, unter anderem $C$, $CO$, $CO_2$, $CH_4$, $H_2O$, $H_2$ und (in sehr geringer Konzentration) $O_2$. Bestimmend für die Aufkohlung ist die Konzentration an freien C-Atomen. Es ist jedoch keine Methode bekannt, letztere direkt zu bestimmen.

Es hat sich gezeigt, daß der $CO_2$-Gehalt der Ofen-Kohlungsatmosphäre ein brauchbares Maß für das Kohlungspotential des Gases ist. Für die Bestimmung der $CO_2$-Konzentration kennt man verschiedene Verfahren, wie z.B. über die Infrarot-Absorption, die aber nur außerhalb des Ofens durchgeführt werden können.

Als weiteres Verfahren für die Ermittlung des Kohlungspotentials wird die Bestimmung des Sauerstoff-Partialdruckes in der Ofenatmosphäre mit Hilfe einer Zirkonoxid-Sauerstoffsonde vorgenommen. Dieser (äußerst geringe) $O_2$-Partialdruck im Ofengas entsteht aus den Gleichgewichten
$CO \rightleftharpoons C + 1/2\ O_2$,
$CO_2 \rightleftharpoons C + O_2$,
$H_2O \rightleftharpoons H_2 + 1/2\ O_2$,
erfaßt also nur einen Mittelwert der drei Ofengaskomponenten $CO$, $CO_2$ und $H_2O$. Die Zirkonoxid-Sauerstoff-Sonde ist außerdem sehr temperaturschockempfindlich und verschmutzungsempfindlich.

Eine weitere indirekte Methode zur Bestimmung des Kohlungspotentials in Gaskohlungsöfen ist in der US-PS 4591132 beschrieben. Man verwendet einen Stahldraht, der denselben Kohlungsparametern ausgesetzt wird wie die zu behandelnden Werkstücke und verfolgt das Fortschreiten der Aufkohlung an der Oberfläche des Drahtes über die Veränderung seines elektrischen Widerstandes. Der Draht wird in periodischen Abständen einer abkohlenden Atmosphäre ausgesetzt und dadurch regeneriert. Dieses Verfahren ist sehr umständlich und sehr ungenau.

Es war daher Aufgabe der vorliegenden Erfindung, ein Verfahren und eine Vorrichtung zur Bestimmung des Kohlungspotentials in Gaskohlungsöfen mittels eines Sensorelements zu finden, mit denen auf einfache und nicht störungsanfällige Weise der Kohlenstoffgehalt des Kohlungsgases bestimmbar ist.

Diese Aufgabe wird erfindungsgemäß dadurch gelöst, daß ein beheiztes Sensorelement dem Kohlungsgas ausgesetzt wird, durch Variation der Temperatur eine Kohlenstoffabscheidung auf dem Sensorelement erzwungen und aus der Temperatur, bei der die Kohlenstoffabscheidung beginnt, das Kohlungspotential errechnet wird.

Den Beginn der Kohlenstoffabscheidung erkennt man vorzugsweise durch Messung des Zusammenbruchs eines elektrischen Isolationswiderstands, wobei der sich abscheidende Kohlenstoff einen Kurzschluß verursacht. Für eine kontinuierliche Messung ist es weiterhin vorteilhaft, wenn die Kohlenstoffabscheidung auf dem Sensor durch Beaufschlagung mit einem oxidierenden Gas periodisch entfernt wird.

Die Vorrichtung zur Bestimmung des Kohlungspotentials enthält ein Sensorelement, das vorzugsweise aus einem elektrische isolierenden Substrat besteht, auf dem zwei räumlich getrennte, mit elektrischen Anschlüssen versehene, metallische Dünnschichtwiderstände aufgebracht sind, von denen einer als Temperaturfühler ausgebildet ist und der andere aus zwei oder mehr elektrische durch Isolierbahnen im Dünnfilm voneinander getrennten Bereichen besteht.

Es hat sich als günstig erwiesen, wenn die Dünnschichtwiderstände aus Iridium bestehen und das Substrat die Form eines Plättchens besitzt, das beidseitig mit einem Dünnschichtwiderstand versehen ist. Die Dünnfilme können vorzugsweise auch auf zwei separaten Substraten aufgebracht sein, deren metallfilmfreien Rückseiten in thermischen Kontakt miteinander stehen. Außerdem ist es von Vorteil, wenn die Vorrichtung Düsen zum Aufblasen von Gasen auf die Dünnschichtwiderstände enthält.

Das erfindungsgemäße Verfahren macht von der Tatsache Gebrauch, daß bei der Gaskohlung durch eine ausreichende, Temperaturerniedrigung eine Abscheidung von Kohlenstoff auf den Werkstücken oder auch auf einem beliebigen, in den Ofenraum hineinragenden Gegenstand erzwungen werden kann.

Befindet sich im Ofenraum ein Sensor, der auf den Beginn einer Kohlenstoffabscheidung auf seiner Oberfläche anspricht, so kann man aus der dazu notwendigen Temperaturerniedrigung den Kohlenstoffgehalt des Kohlungsgases, bzw. dessen Kohlungspotential bestimmen. Der Sensor besteht beispielsweise aus einem dünnen $Al_2O_3$-Plättchen, auf dessen einer Seite ein mäanderförmiger Temperaturmeßwiderstand und auf dessen anderen, dem Külungsgas ausgesetzten Seite, ebenfalls ein Dünnschichtwiderstand aufgebracht ist, der aus zwei durch eine streifenförmige isolierende Aussparung im Metalldünnfilm voneinander elektrisch getrennten Hälften besteht. Wird dieses Substrat mit Temperaturmeßwiderstand und Dünnschichtwiderstand von außen abgekühlt, so scheidet sich bei einer bestimmten, meßbaren Temperatur auf der isolierenden Aussparung im Metallfilm des Dünnschichtwiderstandes eine Kohlenstoffschicht ab, die einen elektrischen Kurzschluß verursacht und so den Beginn der Kohlenstoffabscheidung anzeigt. Aus der Abscheidungstemperatur läßt sich das Kohlungspotential bestimmen und gegebenenfalls durch Änderung der Kohlungsgaszusammensetzung nachregeln. Durch Beaufschlagung mit einem oxidierenden Gas, z.B. einem Stickstoff/Sauerstoffgemisch, läßt sich der Sensor regenerieren und steht für den nächsten Meßzyklus wieder zur Verfügung.

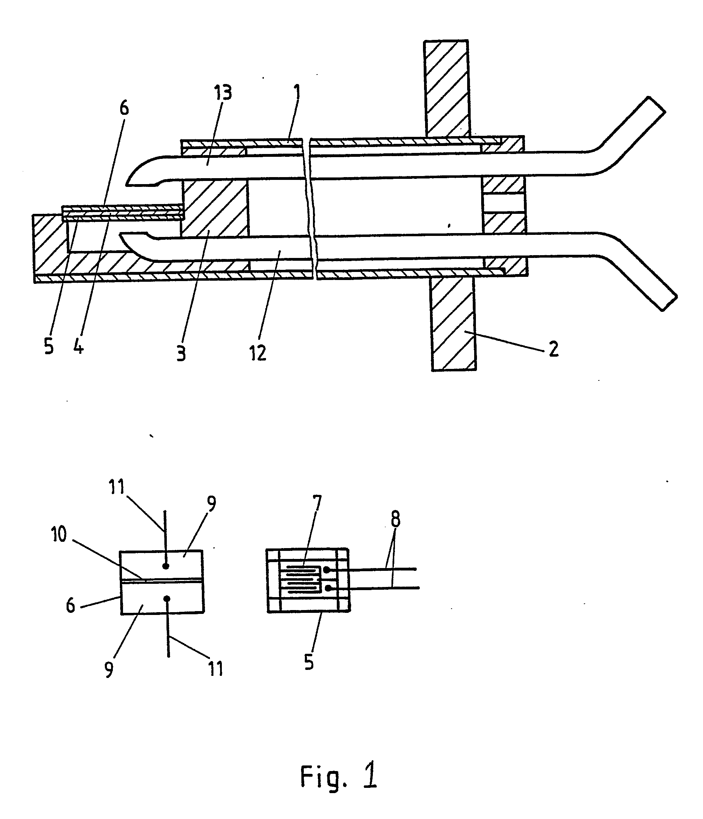

Die Abbildung zeigt schematisch eine beispielhafte Ausführungsform der erfindungsgemäßen Vorrichtung im Längsschnitt und das Sensorelement in Draufsicht von oben und unten.

Die Vorrichtung besteht aus einem Gehäuse (1), das mittels eines Flansches (2) am Ofen befestigt werden kann und in das Ofeninnere ragt. Am vorderen Ende des Gehäuses (1) ist auf einer isolierenden Auflage (3) der Sensor befestigt, bestehend aus einem keramischen Substrat (4), auf dessen einen Seite der Temperaturfühler (5) und auf dessen anderer Seite der Kohlenstoffsensor (6) aufgebracht sind. Der Temperaturfühler (5) besitzt eine mäanderförmige Widerstandsbahn (7) mit entsprechenden elektrischen Anschlüssen (8), der Kohlenstoffsensor (6) besteht aus zwei metallischen Dünnschichtbereichen (9), die durch eine schmale, vom Metallfilm befreite isolierende Bahn (10) elektrisch voneinander getrennt und ebenfalls mit elektrischen Anschlüssen (11) versehen sind. Sowohl der Temperaturfühler (5) als auch der Kohlenstoffsensor (6) können über Düsen (12, 13) mit Gasen beaufschlagt werden.

**Ansprüche**

1. Verfahren zur Bestimmung des Kohlungspotentials in Gaskohlungsöfen mittels eines Sensorelements, dadurch gekennzeichnet, daß ein beheiztes Sensorelement dem Kohlungsgas ausgesetzt wird, durch Variation der Temperatur eine Kohlenstoffabscheidung auf dem Sensorelement erzwungen und aus der Temperatur, bei der die Kohlenstoffabscheidung beginnt, das Kohlungspotential errechnet wird.

2. Verfahren nach Anspruch 1, dadurch gekennzeichnet, daß der Beginn der Kohlenstoffabscheidung durch Messung des Zusammenbruchs eines elektrischen Isolationswiderstands bestimmt wird.

3. Verfahren nach Anspruch 1 und 2, dadurch gekennzeichnet, daß die Kohlenstoffabscheidung auf dem Sensorelement durch Beaufschlagen mit einem oxidierenden Gas periodisch entfernt wird.

4. Vorrichtung zur Bestimmung des Kohlungspotentials in Gaskohlungsöfen mittels eines Sensorelements nach Anspruch 1 bis 3, dadurch gekennzeichnet, daß das Sensorelement aus einem elektrisch isolierenden Substrat (4) besteht, auf dem zwei räumlich getrennte, mit elektrischen Anschlüssen (8, 11) versehene, metallische Dünnschichtwiderstände aufgebracht sind, von denen einer als Temperaturfühler (5) ausgebildet ist, und der zweite so strukturiert ist, daß der Dünnfilm aus zwei oder mehr elektrisch voneinander isolierten Bereichen (9) besteht.

5. Vorrichtung nach Anspruch 4, dadurch gekennzeichnet, daß die Dünnschichtwiderstände aus Iridium bestehen.

6. Vorrichtung nach Anspruch 4 und 5, dadurch gekennzeichnet, daß das Substrat (4) die Form eines Plättchens besitzt, das beidseitig mit einem Dünnschichtwiderstand versehen ist.

7. Vorrichtung nach Anspruch 4, dadurch gekennzeichnet, daß die Dünnschichtwiderstände auf zwei separaten Substraten aufgebracht sind, deren metallfilmfreie Rückseiten in thermischem Kontakt miteinander stehen.

8. Vorrichtung nach Anspruch 4 bis 7, dadurch gekennzeichnet, daß sie Düsen (12, 13) zum Aufblasen von Gasen auf die Dünnschichtwiderstände enthält.

Fig. 1